# FASCICULE DE BREVET EUROPEEN

(11) **EP 0 467 764 B1**
(45) Date de publication et mention de la délivrance du brevet: **15.11.1995**
(21) Numéro de dépôt: 91401960.9
(22) Date de dépôt: 15.07.1991
(51) Int. Cl.: H04Q 11/00

(54) **Système de commutation optique de signaux multiplexés en fréquence**
Optisches Vermittlungssystem für Frequenzmultiplexsignale
Optical switching system for frequency multiplexed signals

(30) Priorité: 17.07.1990 FR 9009108
(43) Date de publication de la demande: 22.01.1992
(73) Titulaire: FRANCE TELECOM, 92131 Issy les Moulineaux (FR)
(72) Inventeur: Oudar, Jean-Louis, F-92290 Chatenay-Malabry (FR)
(74) Mandataire: Signore, Robert

(56) Documents cités:
- EP-A- 0 223 258
- IEEE JOURNAL ON SELECTED AREAS IN COMMUNICATIONS, vol. 6, no. 7, août 1988, pages 1209-1226, New York, US; H.S. HINTON: "Architectural considerations for photonic switching networks"
- IEEE JOURNAL OF LIGHTWAVE TECHNOLOGY, vol. 8, no. 5, 5 mai 1990, pages 660-666, New York, US; S. SUZUKI et al.:"A photonic wavelength-division switching system using tunible laser diode filters"
- IEEE JOURNAL OF QUANTUM ELECTRONICS, vol. 24, no. 11, novembre 1988, pages 2153-2159, New York, US; H. KAWAGUCHI et al.: "Tunable optical-wavelength conversion using an optically triggerable miltielectrode distributed feedback laser diode"
- PROCEEDINGS OF THE FOURTH TIRRENIA INTERNATIONAL WORKSHOP ON DIGITAL COMMUNICATIONS, Tirrenia, 19-23 septembre 1989, pages 313-323; K.Y. ENG: "Photonic switching using tunable optical terminals"

## Description

La présente invention concerne un système de commutation optique de signaux multiplexés en fréquence.

Elle trouve notamment des applications dans le domaine des télécommunications par fibres optiques.

Dans les systèmes "cohérents" de télécommunication par fibres optiques, on est amené à mélanger, dans une même fibre optique, des signaux de différentes "fréquences porteuses" ou fréquences optiques centrales.

On réalise le mélange de plusieurs canaux d'information à partir de différentes sources, chacune de ces dernières étant caractérisée par une fréquence porteuse.

Ce mélange est généralement effectué au moyen d'un coupleur optique à plusieurs entrées et une seule sortie qui est alors couplée à la fibre de transmission.

Une telle opération, qui est un multiplexage en fréquence, ne pose pas de difficulté particulière et les coupleurs optiques actuels présentent des performances satisfaisantes pour ce faire.

Il en va tout autrement pour l'opération de démultiplexage à la sortie de la fibre de transmission, opération qui vise à extraire l'un des canaux, caractérisé par sa fréquence porteuse, pour le transporter ensuite soit vers un photodétecteur soit vers d'autres noeuds de commutation au moyen d'une autre fibre optique.

Pour réaliser cette opération de démultiplexage, il est connu d'utiliser un filtre optique sélectif en longueur d'onde, dont la sélectivité soit suffisante pour extraire, à la sortie de la fibre, un seul des canaux multiplexés.

Ceci présente des difficultés étant donné que l'espacement en fréquence des différents canaux est souvent faible, de l'ordre de 10¹¹ Hz, et que les dispositifs passifs (réalisés avec des réseaux de diffraction ou des interféromètres de Fabry-Perot) présentant une telle sélectivité sont encombrants et coûteux car ils sont très sensibles aux vibrations et aux dérives mécaniques et nécessitent donc un environnement mécanique et thermique stable.

En outre, leur accord sur une fréquence particulière, qui se fait par des déplacements mécaniques, est assez lent à mettre en oeuvre.

On connaît également d'autres filtres optiques passifs qui utilisent des guides d'ondes à corrugations périodiques et qui peuvent être accordés par une commande électrique (notamment quant ils sont réalisés avec des matériaux semi-conducteurs) mais ils permettent difficilement d'obtenir une sélectivité supérieure à 10¹² Hz.

La présente invention a pour but de remédier aux inconvénients précédents en proposant un système de commutation optique de signaux multiplexés en fréquence, qui peut être réalisé de façon à n'occuper qu'un très faible volume, d'où une moins grande sensibilité aux vibrations et à la température que les dispositifs connus mentionnés plus haut, système dont l'accord sur une fréquence particulière est réalisable électriquement, et donc très rapidement, et qui permet d'obtenir une sélectivité très nettement supérieure à 10¹² Hz.

On connaît par l'article de S. SUZUKI et al. publié dans IEEE JOURNAL OF LIGHTWAVE TECHNOLOGY, vol.8, n°5, 5 mai 1990, pages 660-666, des dispositifs comprenant des modulateurs commandés optiquement. Chaque modulateur reçoit en entrée une lumière de référence ainsi qu'un signal d'entrée qui commande le modulateur, ce dernier fournissant en sortie un signal modulé dont la longueur d'onde est celle de la lumière de référence.

De façon précise, la présente invention a pour objet un système de commutation optique de signaux optiques multiplexés en fréquence, conformément à la revendication 1.

Le système objet de la présente invention réalise une opération de démultiplexage en fréquence, commandée par voie optique.

Ce système permet de sélectionner, au moyen d'un faisceau optique de commande, une fréquence porteuse particulière, et d'obtenir en sortie un faisceau optique modulé contenant uniquement les informations associées à cette fréquence porteuse.

Il s'agit donc bien d'un système de commutation optique des signaux multiplexés en fréquence.

L'une des originalités du système objet de l'invention est qu'il s'agit d'un système actif, qui est donc susceptible non seulement de sélectionner un canal particulier mais encore d'amplifier les signaux de ce canal.

Par ailleurs, dans certains modes de réalisation particuliers de ce système, la régénération du signal sélectionné peut être effectuée à une fréquence porteuse différente de la fréquence du canal sélectionné à l'entrée, ce qui élargit les possibilités fonctionnelles du système.

De plus, comme on le verra par la suite, on peut associer côte à côte plusieurs systèmes conformes à l'invention pour réaliser une matrice de commutation optique de signaux multiplexés en fréquence.

Selon un premier mode de réalisation particulier du système objet de l'invention, le dispositif de commutation optique est un dispositif bistable optique intrinsèque (présentant un seuil de commutation bas et un seuil de commutation haut).

Dans un premier système particulier correspondant à ce premier mode de réalisation, l'intensité du faisceau de commande est inférieure au seuil de commutation bas du dispositif bistable intrinsèque et ce dispositif bistable intrinsèque est choisi de façon que son domaine de bistabilité, domaine de fréquence où ce dispositif présente le phénomène de bistabilité, contienne la fréquence optique centrale du signal sélectionné, la fréquence du faisceau optique fourni par la sortie du dispositif étant égale à cette fréquence optique centrale du signal sélectionné.

Dans un deuxième système particulier, correspondant également au premier mode de réalisation, on utilise en outre une autre source de lumière apte à émettre un faisceau monochromatique, appelé faisceau de maintien, dont la fréquence est contenue dans le domaine de bistabilité du dispositif, le moyen de couplage optique est prévu pour coupler les signaux optiques et le faisceau de commande ainsi que le faisceau de maintien, la somme des intensités respectives du faisceau de commande et du faisceau de maintien est inférieure au seuil de commutation bas du dispositif et la fréquence du faisceau de commande est contenue dans le domaine d'absorption du matériau actif du dispositif bistable, les informations transportées par le signal optique sélectionné étant alors reproduites, à la sortie du dispositif bistable, par un faisceau optique dont la fréquence est égale à la fréquence du faisceau de maintien.

La fréquence de ce faisceau de maintien peut être réglable.

Selon un deuxième mode de réalisation particulier du système objet de l'invention, le dispositif de commutation optique est un laser bistable, destiné à être alimenté par un courant électrique dont l'intensité est inférieure au seuil de commutation bas de ce laser bistable, les informations transportées par le signal optique sélectionné étant alors reproduites, à la sortie du laser bistable, par un faisceau optique dont la fréquence est égale à la fréquence d'émission de ce laser bistable.

La fréquence d'émission du laser bistable peut être réglable.

Le système objet de l'invention peut comprendre en outre un isolateur optique à l'entrée du dispositif de commutation optique.

Enfin, le système objet de l'invention peut comprendre une pluralité d'ensembles de commutation, formant une matrice de commutation.

La présente invention sera mieux comprise à la lecture de la description d'exemples de réalisation donnés ci-après à titre purement indicatif et nullement limitatif, en référence aux dessins annexés sur lesquels :
- la figure 1 est une représentation schématique d'un système conforme à l'invention,
- les figures 2A et 2B représentent des caractéristiques d'hystérésis de dispositifs bistables optiques intrinsèques utilisables dans la présente invention,
- la figure 3 est une vue schématique d'un système conforme à l'invention, utilisant un dispositif bistable optique intrinsèque,
- la figure 4 est une vue schématique d'un autre système conforme à l'invention, utilisant également un dispositif bistable optique intrinsèque,
- la figure 5 est une vue schématique d'un système conforme à l'invention, utilisant un laser bistable, et
- la figure 6 est une vue schématique d'une matrice de commutation optique qui est réalisée au moyen d'une pluralité de systèmes conformes à l'invention.

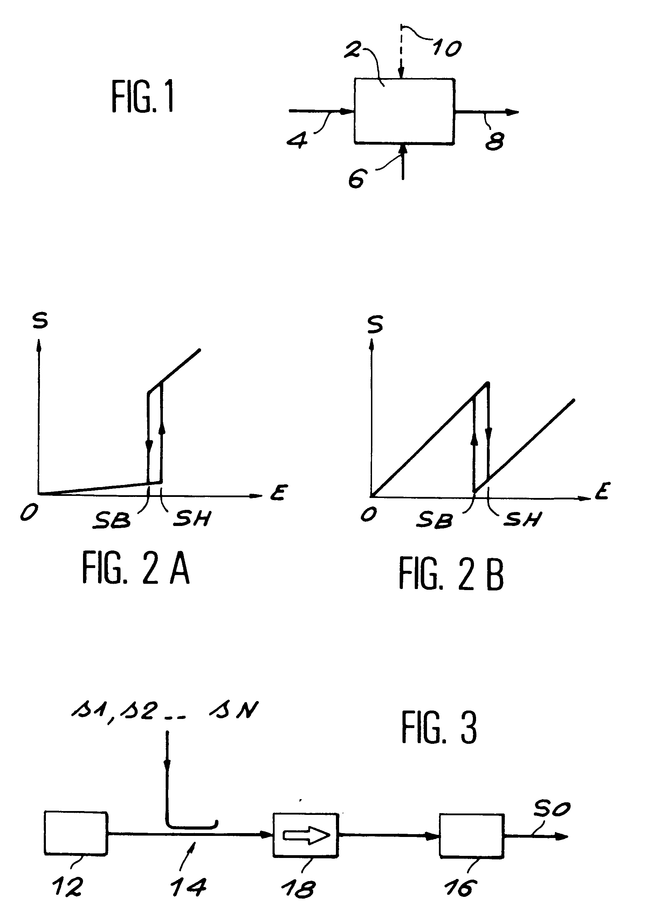

On explique ci-après le principe de l'invention en se référant à la figure 1.

Ce principe repose sur la combinaison d'une commutation optique et d'un homodynage optique.

La commutation optique est utilisée pour commander optiquement la transmission de faisceaux optiques et éventuellement transposer leurs fréquences.

Elle est particulièrement intéressante lorsque ces faisceaux optiques sont des signaux optiques transportant des informations, comme c'est le cas dans les transmissions par fibres optiques.

La commutation optique est caractérisée par le fait que les signaux de sortie qu'elle produit sont de nature optique.

Cette commutation optique est réalisée en utilisant la réponse optique non linéaire de matériaux appropriés, en particulier les variations d'indice de réfraction ou de coefficient d'absorption avec l'intensité lumineuse incidente, pour moduler la phase ou l'intensité d'un ou d'une pluralité de faisceaux optiques à commander.

Cette opération a lieu de manière privilégiée dans les dispositifs bistables optiques, en raison des transitions brusques dont ils sont l'objet, ces dispositifs permettant de réaliser des commutations franches sur les signaux optiques à traiter.

L'intérêt de la commutation optique réside dans le fait qu'elle permet de réaliser des fonctions de l'Electronique sans passer par l'intermédiaire de signaux électriques.

On préserve ainsi les propriétés de bande passante étendue et d'immunité aux parasites électriques, qui constituent les avantages principaux de l'Optique dans le traitement de l'information.

L'homodynage optique est utilisé pour détecter sélectivement un canal parmi plusieurs, ces canaux étant caractérisés par des fréquences porteuses différentes les unes des autres.

Cette homodynage optique est réalisé en superposant sur la partie sensible d'un dispositif de commutation optique comportant un matériau actif à réponse optique non linéaire, par exemple un dispositif bistable optique, l'ensemble des signaux multiplexés en fréquence ainsi qu'un faisceau optique monochromatique intense appelé oscillateur local, dont la fréquence est égale à celle du canal que l'on veut détecter sélectivement.

Le principe de cette sélection est que le dispositif bistable optique réagit de façon quadratique à la superposition des champs électromagnétiques au niveau de sa surface sensible.

Le champ de l'oscillateur local ayant une amplitude nettement plus grande que les amplitudes des différents signaux multiplexés, le terme d'interférence entre cet oscillateur local et le signal optique sélectionné est prépondérant devant les autres termes, en particulier devant les termes ne faisant pas intervenir l'oscillateur local.

Un système conforme à l'invention, qui résulte de la combinaison de la commutation optique et de l'homodynage optique, est schématiquement représenté sur la figure 1.

Ce système, qui porte la référence 2 sur la figure 1, reçoit en entrée un faisceau optique 4, qui véhicule des signaux optiques multiplexés en fréquence et généralement polarisés, ainsi qu'un faisceau optique de commande 6 et fournit en sortie un faisceau optique 8 qui "reproduit" le signal optique sélectionné.

Dans certains cas envisagé par la suite, le système 2 peut nécessiter une alimentation électrique symbolisée par la flèche 10.

Comme on l'a vu, l'amplitude du faisceau optique de commande est nettement plus grande que les amplitudes des différents signaux multiplexés et, plus précisément, égale à K fois l'amplitude maximale de ces différents signaux multiplexés ou K est un nombre entier au moins égal au nombre de signaux multiplexés.

Le point crucial, qui rend possible l'association de l'homodynage optique et de la commutation optique, réside dans l'utilisation d'une réponse optique non linéaire dont la bande passante est plus étroite que la séparation en fréquence des différents canaux multiplexés, c'est-à-dire plus étroite que chacun des intervalles de fréquence qui séparent ces différents canaux.

C'est ainsi que l'on obtient la sélectivité recherchée.

Une autre condition importante dans la présente invention est que la bande passante de la réponse non linéaire soit plus large que la bande de modulation du canal à commuter, c'est-à-dire la bande de fréquence occupée par ce canal.

Dans ces conditions, le faisceau optique de commande, qui est plus intense que les signaux à démultiplexer, peut être simplement mélangé à ces signaux par exemple à l'aide d'un coupleur à fibres optiques.

Seul le canal qui est à la même fréquence que le faisceau de commande interfère avec ce dernier de façon cohérente et lui confère une modulation dont la bande passante est plus étroite que la bande passante non linéaire du dispositif de commutation optique utilisé.

Ce dernier réagit donc uniquement avec le canal en question et "transcrit" sur le faisceau optique qu'il fournit en sortie les informations du canal sélectionné.

L'amplitude de la modulation transcrite dépend, de façon connue, de la polarisation et de la phase relatives du faisceau de commande et du canal sélectionné.

On donne ci-après divers exemples de réalisation du système objet de l'invention.

Le dispositif de commutation optique que ce dernier comprend peut être un dispositif bistable optique intrinsèque.

Un tel dispositif bistable comporte généralement une cavité optique de type Fabry-Perot contenant un matériau actif à réponse optique non linéaire, dont l'indice de réfraction varie avec la densité d'énergie accumulée dans le matériau par photo-excitation, celle-ci étant dûe au rayonnement incident.

Par exemple, dans un matériau semi-conducteur, cette énergie prend la forme de paires électrons-trous, résultant de l'excitation, par voie optique, d'électrons de la bande de valence vers la bande de conduction.

La présence de paires électrons-trous photo-excitées modifie alors l'indice de réfraction du matériau semi-conducteur.

Un tel matériau, incorporé dans une cavité optique et soumis à un rayonnement cohérent dont la longueur d'onde est proche du bord d'absorption du matériau semi-conducteur, constitue un dispositif bistable optique intrinsèque.

Un tel dispositif bistable optique peut passer de l'état "passant" à l'état "non passant", et réciproquement, par variation de l'intensité lumineuse incidente de part et d'autre des seuils de commutation SB (seuil bas) et SH (seuil haut) du dispositif bistable, suivant un certain cycle d'hystérésis.

Les figures 2A et 2B sont des diagrammes illustrant le comportement de deux dispositifs bistables optiques intrinsèques qui diffèrent par leurs cycles d'hystérésis.

Sur chacun de ces deux diagrammes, ce sont des intensités lumineuses qui sont portées en abscisse et en ordonnée.

L'axe des abscisses correspond à l'entrée du dispositif et l'axe des ordonnées correspond à la sortie de ce dispositif.

On voit sur la figure 2A que le dispositif correspondant à cette dernière fournit un signal de sortie S qui reproduit la modulation du signal d'entrée E avec les mêmes variations temporelles que celles de ce dernier.

Au contraire, avec le dispositif correspondant à la figure 2B, le signal de sortie S reproduit la modulation du signal d'entrée E avec des variations temporelles opposées à celles de ce dernier.

Ainsi qu'il est décrit dans le document (1) :
(1) R. Kuszelewicz, J.L. Oudar, J.C. Michel et R. Azoulay, "Monolithic GaAs/AlAs optical bistable étalons with improved switching characteristics", Appl. Phys. Lett. 53(22), 28 novembre 1988, p.2138 à 2140
un dispositif bistable peut être réalisé par un empilement de couches épitaxiées dans le système AlGaAs, avec diverses concentrations d'aluminium.

Pour des faisceaux focalisés suivant un diamètre inférieur à 10 micromètres, la valeur du seuil haut SH est couramment inférieure à 10 mW.

La bande passante de ce dispositif peut être ajustée lors de la fabrication, en modifiant la durée de vie des porteurs photo-excités dans la couche active.

Une valeur typique de cette durée de vie est de 10 ns pour du GaAs de bonne qualité.

Il en résulte une bande passante de l'ordre de 10 MHz.

Cette bande passante peut être étendue jusqu'à au moins 1 GHz en introduisant des impuretés ou des défauts structurels (par exemple par implantation ionique) dans le matériau actif.

Dans le cas où l'on veut faire une matrice de commutation optique comportant une pluralité de ces dispositifs bistables optiques intrinsèques, de tels défauts sont automatiquement introduits lorsqu'on réalise des micro-résonateurs de petites dimensions latérales afin de localiser ces dispositifs sur un substrat, par exemple par gravure ionique réactive de l'empilement de couches épitaxiées autour de la zone à conserver.

Il est bien connu que les centres de recombinaison de surface présents sur les flancs de la zone à graver conduisent à un raccourcissement de la durée de vie comme on le voit dans le document (2) :
(2) J.L. Jewell et al., "GaAs-AlAs monolithic microresonator arrays", Appl. Phys. Lett. 51(2), 13 juillet 1987, p.94 à 96
et permettent ainsi une augmentation de la bande passante.

En tout état de cause, cette bande passante reste toujours inférieure à 10 GHz, ce qui permet de conserver une sélectivité suffisante pour la séparation des canaux multiplexés.

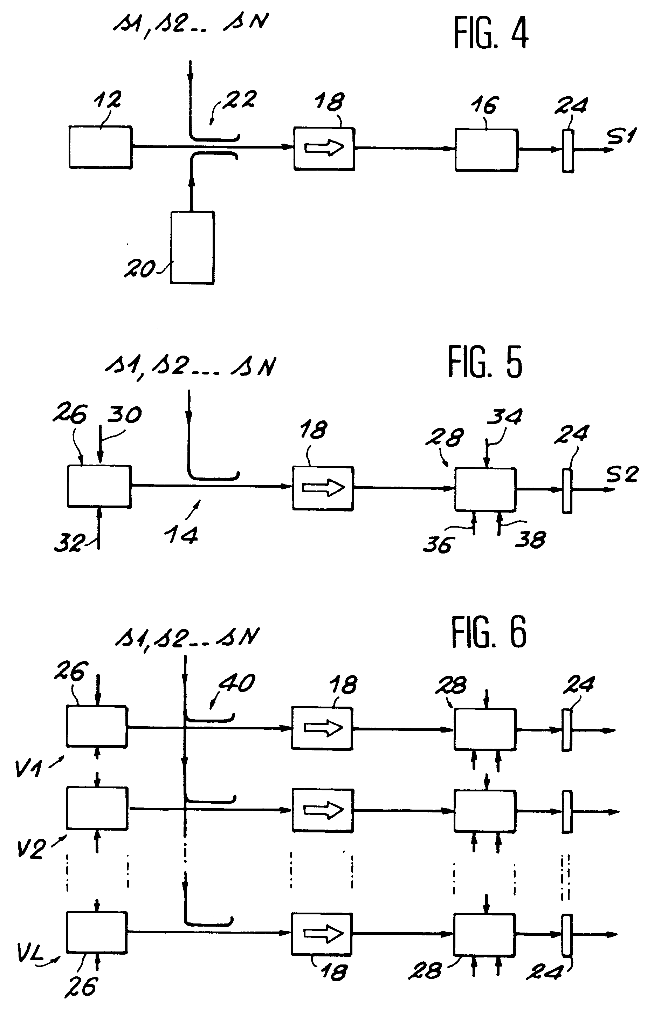

On décrit ci-après deux systèmes conformes à l'invention, qui utilisent tous deux, en tant que dispositif de commutation optique, un dispositif bistable optique intrinsèque, le premier de ces systèmes permettant d'obtenir un signal de sortie ayant la même fréquence porteuse que celle du canal d'entrée sélectionné (figure 3) tandis que le second système permet d'obtenir un signal de sortie ayant une fréquence porteuse différente et indépendante de celle du canal sélectionné (figure 4).

Le système schématiquement représenté sur la figure 3 comprend un laser 12 qui émet un faisceau intense, cohérent, appelé "faisceau de commande", dont la fréquence est égale à la fréquence porteuse que l'on veut sélectionner et dont la polarisation et la phase sont ajustées pour maximiser l'interférence de ce faisceau de commande avec le canal sélectionné.

On connaît, pour ce faire, des procédés pour asservir la polarisation et la phase du faisceau de commande sur celle d'un signal incident (canal sélectionné).

Le système de la figure 3 comprend également un moyen de couplage optique 14 (par exemple un coupleur à fibre optique, un hologramme ou un miroir à réflexion partielle) qui est destiné à mélanger le faisceau de commande aux signaux optiques multiplexés s1, s2, ..., sN.

Le système de la figure 3 comprend en outre un dispositif bistable optique intrinsèque 16 qui reçoit en entrée le mélange des signaux multiplexés et du faisceau de commande.

Ce dispositif 16 est choisi de façon que sa plage de fréquence où il est effectivement bistable contienne la fréquence porteuse du signal que l'on veut sélectionner.

De plus, le laser 12 est réglé de façon que l'intensité du faisceau de commande soit inférieure au seuil de commutation bas SB du dispositif bistable 16 (mais, bien entendu, suffisamment élevée pour que le faisceau arrivant à l'entrée de ce dispositif soit capable d'en provoquer la commutation).

En présence des signaux multiplexés, le canal dont la fréquence porteuse est identique à celle du faisceau de commande se mélange de façon cohérente avec ce dernier et les signaux d'information transmis sur ce canal font passer le dispositif bistable de son état passant à son état non passant et réciproquement.

Le système de la figure 3 peut comprendre en outre un isolateur optique 18 qui est placé à l'entrée du dispositif bistable 16 et qui est destiné à éviter que la lumière issue du laser 12 et parvenant à ce dispositif 16 ne retourne vers le laser 12, ce qui risquerait de perturber le fonctionnement de ce dernier.

La puissance du signal de sortie S0 fourni par le dispositif bistable 16 n'est que légèrement inférieure à celle du faisceau de commande et donc, du fait de l'homodynage, nettement supérieure à la puissance de chacun des signaux multiplexés s1, s2, ..., sN.

Le système de la figure 3 amplifie donc celui des signaux s1, s2, ..., sN que l'on a choisi en même temps qu'il sélectionne ce signal choisi.

Pour passer d'un canal à l'autre, il est nécessaire de changer la fréquence du faisceau de commande émis par le laser 12, qui agit comme un oscillateur local.

A cet effet, on utilise en tant que laser 12 un laser accordable en fréquence (étant entendu qu'à chaque changement de canal on réajuste éventuellement la polarisation et la phase du faisceau de commande en fonction de celles du nouveau canal sélectionné).

Il peut être également nécessaire de réajuster la fréquence de résonance du dispositif bistable intrinsèque 16, ce qui peut se faire en mettant en oeuvre divers moyens par exemple fondés sur l'effet électro-optique, sur l'effet piézo-électrique ou, plus simplement, sur des variations de température.

Ce réajustement est généralement moins critique que le réglage de la fréquence de l'oscillateur local car la bande passante typique d'un résonnateur de type Fabry-Perot utilisable pour réaliser un dispositif bistable intrinsèque est de l'ordre de 10¹² Hz, alors que la fréquence de l'oscillateur local doit être réglée avec une précision meilleure que la bande passante de modulation du signal sélectionné.

Pour obtenir un signal de sortie à une fréquence différente de celle du canal d'entrée sélectionné, on modifie le système de la figure 3 de la manière indiquée ci-après en se référant à la figure 4.

On ajoute au système de la figure 3 un autre laser 20 destiné à émettre un faisceau intense, appelé "faisceau de maintien", et l'on remplace le moyen de couplage 14 par un autre moyen de couplage optique 22 destiné à mélanger le faisceau de commande issu du laser 12, le faisceau de maintien issu du laser 20 et les signaux multiplexés s1, s2, ..., sN.

Dans le cas du système de la figure 4, on utilise de préférence l'isolateur optique 18 pour empêcher le faisceau lumineux qui arrive sur le dispositif 16 de retourner vers les lasers 12 et 20, ce qui risquerait de perturber le fonctionnement de ces derniers.

Dans le système de la figure 4, pour obtenir un signal de sortie S1 de fréquence différente de celle du canal sélectionné, on sépare les fonctions de bistabilité optique et de sélection-amplification par homodynage en mélangeant aux signaux multiplexés, présents à l'entrée du système, non plus un seul mais deux faisceaux monochromatiques, à savoir le faisceau de commande et le faisceau de maintien.

Le laser 20 est prévu pour que la fréquence de ce faisceau de maintien soit comprise dans la plage de fréquence où le dispositif 16 est bistable.

Ainsi, les caractéristiques de la figure 2A ou de la figure 2B (suivant le dispositif 16 choisi) sont obtenues lorsque la puissance lumineuse incidente sur ce dispositif 16 varie.

De plus, les laser 12 et 20 sont réglés de façon que la somme des intensités du faisceau de maintien et du faisceau de commande soit inférieure au seuil bas SB du dispositif 16 (mais, bien entendu, suffisamment élevée pour que le faisceau arrivant à l'entrée de ce dispositif soit capable d'en provoquer la commutation).

Le faisceau de commande constitue encore ici un oscillateur local, accordé sur la fréquence porteuse du canal d'entrée sélectionné.

Le signal de sortie S1 du système est obtenu à la fréquence du faisceau de maintien.

Le système de la figure 4 comprend en outre un moyen de filtrage 24 qui est placé à la sortie du dispositif bistable 16 et qui est prévu pour séparer ce signal de sortie S1 des autres composantes optiques issues du dispositif bistable intrinsèque 16.

On obtient donc seulement ce signal S1 à la sortie du moyen de filtrage 24.

Ce dernier peut être un filtre en longueur d'onde pour éliminer essentiellement le faisceau de commande qui est intense.

En variante, on peut utiliser un moyen de polarisation en association avec un faisceau de commande et un faisceau de maintien dont les polarisations sont rectilignes et perpendiculaires l'une à l'autre.

Le fonctionnement du système de la figure 4 diffère de celui du système de la figure 3.

En effet, dans le système de la figure 3, le signal d'entrée sélectionné interfère directement avec le faisceau de commande et modifie l'intensité de ce dernier.

Ce signal sélectionné "déplace" donc, sur la courbe de la figure 2A (ou de la figure 2B), le point de fonctionnement du dispositif bistable 16 de part et d'autre des seuils de commutation SB et SH.

Dans le système de la figure 4, le faisceau de maintien conserve une intensité constante mais l'interférence du signal sélectionné et de l'oscillateur local engendre des paires électrons-trous supplémentaires dans la couche active du dispositif bistable intrinsèque 16 (en supposant que ce dernier soit réalisé avec un matériau semi-conducteur), ce qui a pour effet de faire "basculer" ce dispositif d'un état à l'autre.

On précise que, pour obtenir ce basculement, on choisit le laser 12 de façon que la longueur d'onde du faisceau de commande soit située à l'intérieur de la plage d'absorption de la couche active du dispositif bistable intrinsèque.

Dans la présente invention, on peut également utiliser, en tant que dispositif de commutation optique, un laser bistable.

On considère par exemple un laser à semiconducteur qui est bien adapté à ce type d'application.

On rappelle que, dans un tel laser, l'inversion de population est obtenue par injection d'un courant électrique dans une jonction p-n et que l'effet laser se produit au-delà d'un certain courant qui est appelé "courant de seuil".

Lorsque l'injection de courant n'est pas uniforme dans la jonction p-n, certaines zones, dont le pompage optique est plus faible que pour d'autres zones, ne sont pas rendues amplificatrices et restent légèrement absorbantes.

Cette légère absorption peut néanmoins être saturée par l'émission laser elle-même et l'on obtient dans ce cas une caractéristique courant-puissance qui présente une hystérésis : la puissance émise présente une discontinuité marquée pour certaines valeurs du courant injecté, correspondant aux seuils de commutation SB et SH.

Pour ces questions, on se reportera par exemple au document (3) :
(3) H. Kawaguchi, "Optical input and output characteristics for bistable semiconductors lasers", Appl. Phys. Lett. 41(8), 15 octobre 1982, p.702 à 704.

En vue d'une utilisation dans la présente invention, la particularité intéressante de ces lasers bistables est que le basculement au-delà d'un seuil de commutation peut être commandé par un signal optique.

Pour réaliser à partir d'un laser bistable un système de commutation conforme à l'invention, il suffit, dans l'exemple décrit en se référant à la figure 3, de mélanger les signaux d'entrée multiplexés à un faisceau de commande jouant le rôle d'oscillateur local, de diriger le faisceau résultant du mélange sur la jonction p-n du laser bistable et d'alimenter ce dernier par un courant électrique dont la valeur est ajustée à une valeur inférieure au seuil bas SB du laser bistable (mais, bien entendu, suffisamment élevée pour que le faisceau arrivant à l'entrée de ce laser bistable soit capable d'en provoquer la commutation).

L'homodynage du signal d'entrée sélectionné produit une modulation sélective du faisceau de commande, qui dépend uniquement de l'information présente sur le canal sélectionné.

Cette modulation fait "basculer" le laser bistable de part et d'autre des seuils de commutation et la puissance émise par le laser bistable subit une modulation sous l'effet de ces basculements.

Le faisceau émis par ce laser bistable constitue le signal de sortie du système, que l'on filtre pur ne conserver que le signal porteur des informations du signal d'entrée sélectionné (le signal filtré ayant la fréquence d'émission du laser bistable comme fréquence optique centrale).

Les développements récents de la technologie des lasers à semi-conducteurs permettent de fabriquer des lasers "multi-sections" à plusieurs électrodes de commande, à savoir une électrode pour l'injection de courant, une électrode pour l'accord en longueur d'onde et une électrode de modulation. Sur ce sujet, on pourra consulter par exemple le document (4) suivant :
(4) S. Murata, I. Mito et K. Kobayashi, Electron. Letters 23(8) 1987.

L'application d'une tension électrique sur cette électrode de modulation permet de réaliser une injection non uniforme de courant électrique dans la jonction p-n et d'obtenir ainsi de manière facilement contrôlable une caractéristique de laser bistable.

Un avantage supplémentaire de ce type de laser est que la longueur d'onde émise peut être commandée électriquement.

Sur la figure 5, on a représenté schématiquement un autre système conforme à l'invention, résultant de l'association de deux lasers à semi-conducteurs qui sont accordables en longueur d'onde.

Plus précisément, le système de la figure 5 comprend un premier laser à semi-conducteurs 26 prévu pour fonctionner en régime continu et servant d'oscillateur local ainsi qu'un deuxième laser à semiconducteurs 28 prévu pour fonctionner en régime bistable.

Les signaux multiplexés, s1, s2, ..., sN sont mélangés, grâce au moyen de couplage 14, au faisceau de commande issu du laser 26 et le faisceau résultant de ce mélange est envoyé, à travers l'isolateur optique 18, à l'entrée du laser bistable 28.

Le laser 26 permet de sélectionner, par homodynage, l'un des canaux multiplexés en fonction de sa fréquence porteuse.

Comme pour le laser 12 des figures 3 et 4, la polarisation et la phase du faisceau émis par le laser 26 sont asservies sur celles du canal sélectionné.

On a symbolisé par une flèche 30, sur la figure 5, l'électrode d'injection du laser 26 et, par une flèche 32, l'électrode d'accord en longueur d'onde de ce laser 26, permettant de commander la fréquence d'émission de ce dernier en vue de la rendre égale à la fréquence porteuse du canal que l'on veut sélectionner.

Le laser 28, qui fonctionne en régime bistable, permet de réémettre le signal que l'on a sélectionné par homodynage, sur une fréquence porteuse différente, ajustable par une commande électrique.

Sur la figure 5, on a symbolisé par une flèche 34 l'électrode d'injection du laser 28, par une flèche 36 l'électrode d'accord en longueur d'onde de ce laser, permettant de commander sa fréquence d'émission et, par une flèche 38, l'électrode de modulation de ce laser 28, permettant d'en commander la bistabilité.

Le système 5 comprend encore le moyen de filtrage 24 que l'on place à la sortie du laser 28 et qui permet d'éliminer du faisceau fourni par ce laser 28 la lumière issue du laser 26, pour avoir seulement, à la sortie du moyen de filtrage 24, un signal S2 qui reproduit les informations du canal sélectionné par le système de la figure 5.

On obtient encore un système conforme à l'invention en associant une pluralité de systèmes du genre de celui qui est représenté sur la figure 4 ou une pluralité de systèmes du genre de celui qui est représenté sur la figure 5, en vue d'obtenir une matrice de commutation optique.

On remarquera que si N canaux multiplexés arrivent à l'entrée d'un système du genre de celui de la figure 5 et si le laser bistable correspondant est susceptible d'émettre sur M fréquences porteuses différentes, on est capable de réaliser, à l'aide d'un seul système du genre de celui de la figure 5, une interconnexion parmi les N x M interconnexions possibles entre N fréquences d'entrée et M fréquences de sortie.

Si l'on utilise un système du genre de celui de la figure 4, les M fréquences porteuses différentes peuvent être obtenues en utilisant un laser 20 accordable, capable d'émettre sur M fréquences différentes.

Une matrice de commutation optique, conforme à l'invention, est schématiquement représentée sur la figure 6 et comprend L systèmes qui portent les références V1, V2, ..., VL et qui sont par exemple du genre de celui qui est représenté sur la figure 5, à ceci près que l'on n'utilise pas, dans le cas de la figure 6, L moyens de couplage 14 mais un moyen de couplage 40 prévu pour envoyer dans chacun des systèmes V1, V2, ..., VL les signaux s1, s2, ..., sN.

Une telle matrice permet de réaliser simultanément plusieurs interconnexions en distribuant, comme on vient de le voir, l'ensemble des N signaux d'entrée s1, s2, ..., sN sur chacun des L systèmes V1, V2, ..., VL.

Chacun de ces derniers possède un oscillateur accordable indépendamment des autres et également une fréquence d'émission ajustable indépendamment des autres.

L'ensemble de ces L systèmes constitue une matrice de commutation à L liens, entre N entrées et M sorties.

Les L signaux de sortie obtenus peuvent alors être mélangés dans une même fibre optique non représentée.

## Revendications

1. Système de commutation optique de signaux optiques multiplexés en fréquence (s1, s2, ..., sN), chacun de ces signaux transportant des informations et étant associé à une fréquence optique centrale, système caractérisé en ce qu'il comprend, pour réaliser un homodynage optique, au moins un ensemble de commutation comportant :
- au moins une source de lumière (12), apte à émettre un faisceau monochromatique cohérent, appelé faisceau de commande, dont la fréquence est égale à la fréquence optique centrale de l'un des signaux optiques, signal optique que l'on a sélectionné, et dont l'amplitude est égale à K fois l'amplitude maximale des signaux optiques, K étant un nombre entier au moins égal au nombre de ces signaux, ce faisceau de commande étant capable d'interférer avec le signal que l'on a sélectionné,
- un moyen de couplage optique (14, 22, 40) des signaux optiques multiplexés en fréquence et du faisceau de commande, et
- un dispositif de commutation optique (16, 28) comportant un matériau actif à réponse optique non linéaire, dont la bande passante est d'une part plus étroite que les intervalles séparant les bandes de fréquence occupées par les signaux optiques, multiplexés en fréquence et d'autre part plus large que la bande de fréquence occupée par le signal optique sélectionné, ce dispositif (16, 28) recevant en entrée la lumière issue du moyen de couplage optique (14, 22, 40) et fournissant en sortie un faisceau optique qui reproduit les informations transportées par le signal optique sélectionné, ce dispositif ayant ainsi une double fonction de filtrage optique et de commutation optique.

2. Système selon la revendication 1, caractérisé en ce que le dispositif de commutation optique est un dispositif bistable optique intrinsèque (16).

3. Système selon la revendication 2, caractérisé en ce que l'intensité du faisceau de commande est inférieure au seuil de commutation bas du dispositif bistable intrinsèque (16) et en ce que ce dispositif est choisi de façon que son domaine de bistabilité, domaine de fréquence où ce dispositif présente le phénomène de bistabilité, contienne la fréquence optique centrale du signal sélectionné, la fréquence du faisceau optique fourni par la sortie du dispositif (16) étant égale à cette fréquence optique centrale du signal sélectionné.

4. Système selon la revendication 2, caractérisé en ce qu'il comprend en outre une autre source de lumière (20) apte à émettre un faisceau monochromatique, appelé faisceau de maintien, dont la fréquence est contenue dans le domaine de bistabilité du dispositif, en ce que le moyen de couplage optique (22) est prévu pour coupler les signaux optiques et le faisceau de commande ainsi que le faisceau de maintien, en ce que la somme des intensités respectives du faisceau de commande et du faisceau de maintien est inférieure au seuil de commutation bas du dispositif et en ce que la fréquence du faisceau de commande est contenue dans le domaine d'absorption du matériau actif du dispositif bistable (16), les informations transportées par le signal optique sélectionné étant alors reproduites, à la sortie du dispositif bistable, par un faisceau optique dont la fréquence est égale à la fréquence du faisceau de maintien.

5. Système selon la revendication 4, caractérisé en ce que la fréquence du faisceau de maintien est réglable.

6. Système selon la revendication 1, caractérisé en ce que le dispositif de commutation optique est un laser bistable (28), destiné à être alimenté par un courant électrique dont l'intensité est inférieure au seuil de commutation bas de ce laser bistable, les informations transportées par le signal optique sélectionné étant alors reproduites, à la sortie du laser bistable, par un faisceau optique dont la fréquence est égale à la fréquence d'émission de ce laser bistable (28).

7. Système selon la revendication 6, caractérisé en ce que la fréquence d'émission du laser bistable (28) est réglable.

8. Système selon l'une quelconque des revendications 1 à 7, caractérisé en ce que la fréquence du faisceau de commande est réglable.

9. Système selon l'une quelconque des revendications 1 à 8, caractérisé en ce qu'il comprend en outre un isolateur optique (18) à l'entrée du dispositif de commutation optique (16, 28).

10. Système selon la revendication 8 et l'une quelconque des revendications 5 et 7, caractérisé en ce qu'il comprend une pluralité d'ensembles de commutation (V1, V2, ..., VL), formant une matrice de commutation.

## Patentansprüche

1. Optische Umschaltvorrichtung für in Frequenzmultiplex vorliegende optische Signale (s1, s2, ..., sN) von denen jedes Signal Informationen trägt und einer optischen Mittenfrequenz zugeordnet ist,
**dadurch gekennzeichnet,**
daß das System zum Realisieren einer optischen Multiplexauflösung mindestens eine Umschaltanordnung aufweist, welche enthält:
- mindestens eine Lichtquelle (12) zum Emittieren eines momochromatischen kohärenten Lichtstrahls, als Nachweisstrahl bezeichnet, dessen Frequenz der optischen Mittenfrequenz eines der optischen Signale entspricht, nämlich dem ausgewählten optischen Signal, und dessen Amplitude dem K-fachen der maximalen Amplitude der optischen Signale entspricht, wobei K eine ganze Zahl ist, die mindestens ebenso groß ist wie die Anzahl dieser Signale, und der Nachweisstrahl in der Lage ist, mit dem ausgewählten Signal zu interferieren,
- eine optische Koppeleinrichtung (14, 22, 40) zum optischen Koppeln von in Frequenzmultiplex vorliegenden optischen Signalen und dem Nachweisstrahl, und
- eine optische Umschalteinrichtung (16, 28), die ein aktives Material mit nicht-linearem optischen Ansprechverhalten aufweist, dessen Durchlaßband einerseits schmaler ist als die Intervalle, welche die Frequenzbänder trennen, die von den optischen, im Frequenzmultiplex vorliegenden Signalen belegt werden, und andererseits breiter ist als das Frequenzband, welches von dem ausgewählten optischen Signal belegt wird, wobei diese Einrichtung (16, 28) am Eingang das von der optischen Koppeleinrichtung (14, 22, 40) abgegebene Licht empfängt und am Ausgang einen optischen Strahl abgibt, der die durch das ausgewählte optische Signal getragenen Informationen reproduziert, wobei die Einrichtung folglich eine doppelte Funktion der optischen Filterung und der optischen Umschaltung aufweist.

2. Vorrichtung nach Anspruch 1,
**dadurch gekennzeichnet,**
daß die optische Umschalteinrichtung eine eigen-bistabile optische Einrichtung (16) ist.

3. Vorrichtung nach Anspruch 2,
**dadurch gekennzeichnet,**
daß die Stärke des Nachweisstrahls unterhalb der unteren Umschaltschwelle der eigenbistabilen Einrichtung (16) liegt, und daß die Einrichtung derart gewählt ist, daß ihr bistabiler Bereich, der Frequenzbereich, wo diese Einrichtung bistabile Eigenschaft aufweist, die optische Mittenfrequenz des ausgewählten Signals enthält, wobei die Frequenz des am Ausgang der Einrichtung (16) gelieferten Lichtstrahls gleich dieser optischen Mittenfrequenz des ausgewählten Signals ist.

4. Vorrichtung nach Anspruch 2,
**dadurch gekennzeichnet,**
daß sie außerdem eine weitere Lichtquelle (20) aufweist, die einen monochromatischen Strahl, als Aufrechterhaltungsstrahl bezeichnet, zu emittieren vermag, dessen Frequenz im Bistabilitätsbereich der Einrichtung enthalten ist, daß die optische Koppeleinrichtung (22) vorgesehen ist, um die optischen Signale und den Nachweisstrahl sowie den Aufrechterhaltungsstrahl zu koppeln, daß die Summe der jeweiligen Intensitäten des Nachweisstrahls und des Aufrechterhaltungsstrahls unterhalb der unteren Umschaltschwelle der Einrichtung liegen, und daß die Frequenz des Nachweisstrahls in dem Absorptionsbereich des aktiven Materials der bistabilen Einrichtung (16) enthalten ist, so daß die von dem ausgewählten optischen Signal getragenen Informationen am Ausgang der bistabilen Einrichtung durch einen optischen Strahl reproduziert werden, dessen Frequenz der Frequenz des Aufrechterhaltungsstrahls gleicht.

5. Vorrichtung nach Anspruch 4,
**dadurch gekennzeichnet,**
daß die Frequenz des Aufrechterhaltungsstrahls regelbar ist.

6. Vorrichtung nach Anspruch 1,
**dadurch gekennzeichnet,**
daß die optische Umschaltvorrichtung ein bistabiler Laser (28) ist, der mit einem elektrischen Strom gespeist wird, dessen Stärke unterhalb der unteren Umschaltschwelle dieses bistabilen Lasers liegt, wobei die von dem ausgewählten optischen Signal getragenen Informationen am Ausgang des bistabilen Lasers von dem optischen Strahl reproduziert werden, dessen Frequenz der Emissionsfrequenz des bistabilen Lasers (28) entspricht.

7. Vorrichtung nach Anspruch 6,
**dadurch gekennzeichnet,**
daß die Emissionsfrequenz des bistabilen Lasers (28) regelbar ist.

8. Vorrichtung nach irgendeinem der Ansprüche 1 bis 7,
**dadurch gekennzeichnet,**
daß die Frequenz des Nachweisstrahls regelbar ist.

9. Vorrichtung nach irgendeinem der Ansprüche 1 bis 8,
**dadurch gekennzeichnet,**
daß sie außerdem einen optischen Isolator (18) am Eingang der optischen Umschalteinrichtung (16, 18) aufweist.

10. Vorrichtung nach Anspruch 8 und einem der Ansprüche 5 und 7,
**dadurch gekennzeichnet,**
daß sie mehrere Umschaltanordnungen (V1, V2, ..., VL) enthält, die eine Schaltmatrix bilden.

## Claims

1. System for the optical switching of frequency multiplexed optical signals (s1, s2, ... sN) each of the said signals transporting informations and being associated with a centre optical frequency, characterized in that it has for performing optical homodyning at least one switching means comprising at least one light source (12) able to emit a coherent monochromatic beam, called the control beam, whose frequency is equal to the centre optical frequency of one of the optical signals, namely that which has been selected, and whose amplitude is equal to K times the maximum amplitude of the optical signals, K being an integer at least equal to the number of signals, said control beam being able to interfere with the signal which has been selected, a means (14, 22, 40) for the optical coupling of the frequency multiplexed optical signals and the control beam and an optical switching device (16, 28) having an active material with a non-linear optical response, whose passband is on the one hand narrower than the interval separating the frequency bands occupied by the optical signals and on the other hand wider than the frequency band occupied by the selected optical signal, said device (16, 28) receiving at the input the light from the optical coupling means (14, 22, 40) and supplying at the output an optical beam, which reproduces the informations transported by the selected optical signal, so that the said device has a double optical filtering and optical switching function.

2. System according to claim 1, characterized in that the optical switching device is an intrinsic, optical, bistable device (16).

3. System according to claim 2, characterized in that the intensity of the control beam is below the low switching threshold of the intrinsic bistable device (16) and the latter is chosen in such a way that its bistability range, i.e. the frequency range where said device has the bistability phenomenon, contains the centre optical frequency of the selected signal, the frequency of the optical beam supplied by the output of said device (16) being equal to said centre optical frequency of the selected signal.

4. System according to claim 2, characterized in that it also comprises another light source (20) able to emit a monochromatic beam, called the maintenance beam, whose frequency is contained in the bistability range of the device, the optical coupling means (22) being provided to couple the optical signals and the control beam, as well as the maintenance beam, the sum of the respective intensities of the control beam and the maintenance beam being below the low switching threshold of the device and the frequency of the control beam is contained in the absorption range of the active material of the bistable device (16), the informations transported by the selected optical signal then being reproduced, at the output of the bistable device, by an optical beam, whose frequency is equal to the frequency of the maintenance beam.

5. System according to claim 4, characterized in that the frequency of the maintenance beam is regulatable.

6. System according to claim 1, characterized in that the optical switching device is a bistable laser (28), which is supplied by an electric current, whose intensity is below the bottom switching threshold of said bistable laser, the informations transported by the selected optical signal then being reproduced, at the output of the bistable laser, by an optical beam, whose frequency is equal to the emission beam of said bistable laser (28).

7. System according to claim 6, characterized in that the emission frequency of the bistable laser (28) is regulatable.

8. System according to any one of the claims 1 to 7, characterized in that the frequency of the control beam is regulatable.

9. System according to any one of the claims 1 to 8, characterized in that it also has an optical isolator (18) at the input of the optical switching device (16, 28).

10. System according to claim 8 and either of the claims 5 and 7, characterized in that it has a plurality of switching means (V1, V2, ... VL) forming a switching matrix.
